# EUROPÄISCHE PATENTANMELDUNG

(11) **EP 4 325 131 A1**
(43) Veröffentlichungstag der Anmeldung: **21.02.2024**
(21) Anmeldenummer: 23191572.9
(22) Anmeldetag: 16.08.2023
(51) Int. Cl.: F24D 19/10, F24H 15/215, F24H 15/219, F24H 15/254, F24H 15/258, F24H 15/421, F24H 15/45, F24H 15/457, G05D 23/19

(54) **MESS- UND ANALYSE-SYSTEM ZUR BEWERTUNG DES HYDRAULISCHEN ABGLEICHS EI-NER RAUMHEIZUNGSANLAGE**

(30) Priorität: 17.08.2022 DE 102022120825
(71) Anmelder: Blossom-IC Intelligent Controls AG, 87700 Memmingen (DE)
(72) Erfinder: Donath, Martin, 18211 Ostseebad Nienhagen (DE)
(74) Vertreter: Baumann, Rüdiger Walter

(57) **Zusammenfassung**

Die Erfindung betrifft ein Verfahren zur Zustandsbewertung des hydraulischen Abgleichs wenigstens eines Heizkreises unter Verwendung eines messwertbasierten Mess- und Analyse-Systems umfassend die Schritte: Erfassen von Messwerten für ein zustands-, zeit- und lastabhängige Aufheizverhalten des wenigstens einen Heizkreises, umfassend: die Temperaturwerte der Vorlauftemperatur und der Rücklauftemperatur die Temperaturspreizung von Vorlauftemperatur und Rücklauftemperatur, und die zeitabhängigen Aufheizgradienten von Vorlauftemperatur, Rücklauftemperatur und Spreizung; Analyse der erfassten Messwerte des Heizkreises; Ableitung eines Indikators für den Spreizungsaufheizgradienten aus den erfassten Messwerten; Bewertung des Zustands eines hydraulischen Abgleichs des wenigstens einen Heizkreises anhand des Indikators für den Spreizungsaufheizgradienten und Ausgabe von Steuerungswerten zur Anpassung des hydraulischen Abgleichs des wenigstens einen Heizkreises und eine Erfassungs- und Auswerteeinheit zur Bewertung des Zustands des hydraulischen Abgleich.

## Beschreibung

Die Erfindung betrifft ein Mess- und Analyse-System zur Bewertung des hydraulischen Abgleichs eines Heiz- oder Kühlkreises mittels Temperaturfühlern.

In der Mehrzahl von Bestandsgebäuden besteht das Problem des nicht vorhandenen hydraulischen Abgleichs der Heiz- oder Kühlkreise von Komponenten für die Raumbeheizung oder -kühlung und Erwärmung von Trinkwasser. Als Kreis (Heiz- oder Kühlkreis) im Sinne der vorliegenden Erfindung wird das Rohrleitungssystem mit einem Medium, vorzugsweise Wasser, von Vorlauf, Rücklauf und angeschlossenen Heiz- oder Kühlflächen definiert. Abweichungen vom technisch und gesetzlich geforderten Zustand haben ihre Ursache in der bisher nicht vorhandenen Möglichkeit, den hydraulischen Abgleich eines Kreises im Betriebszustand nach einheitlich vorgegebenen Kriterien messwertbasiert kontrollieren zu können.

Ein fehlender hydraulischer Abgleich führt zu Fehlfunktionen und Energieverschwendung. So fordert die Bundesregierung in der aktuellen Energiekrise: "Vermieterinnen und Vermieter von Mehrparteienhäusern sollen einen hydraulischen Abgleich machen, soweit nicht bereits geschehen. Ein hydraulischer Abgleich verbessert die Effizienz der Heizung, weil dann das Heizwasser optimal verteilt wird."

Im Folgenden wird die Erfindung im Zusammenhang mit Raumheizungen beschrieben, ohne die Erfindung jedoch hierauf zu beschränken. Das erfindungsgemäße Verfahren kann auch in übergeordneten Heizungssystemen mit einem oder mehreren Heizkreisen ausgeführt werden. Bei der Verwendung in mehreren, insbesondere gekoppelten, Heizkreisen ist es möglich, eine Messwerterfassung und -auswertung und eine nach Auswertung gegebenenfalls notwendige Anpassung des hydraulischen Abgleichs über mehrere Heizkreise hinweg vorzunehmen.

Zur Lösung des Problems gibt es bisher technische und organisatorische Ansätze, die jedoch über Berechnungsvorgaben und Forderungen nicht hinausgehen. So verlangt die VOB Teil C /DIN 18380, dass Umwälzpumpen, Armaturen und Rohrleitungen durch Berechnung so aufeinander abzustimmen sind, dass auch bei den zu erwartenden wechselnden Betriebsbedingungen eine ausreichende Wassermengenverteilung sichergestellt ist und die zulässigen Geräuschpegel nicht überschritten werden. Eine Aussage, wie dieser Abgleich zu kontrollieren ist, wird nicht getroffen. Selbst der Normentwurf "Hydraulische Systeme in Heiz-, Kühl- und Raumlufttechnischen Anlagen enthält keinerlei Kriterien, nach denen die Qualität des hydraulischen Abgleichs in einer Bestandsanlage kontrolliert bzw. nachgewiesen werden kann. Im Normentwurf Teil 1 Grundlagen wird der hydraulische Abgleich wie folgt definiert: "Der hydraulische Abgleich ist ein Verfahren zum Bemessen und Einregulieren von hydraulischen Systemen. Im engeren Sinne ist gemeint, mit anwendungsgerecht, d.h. nach den allgemein anerkannten Regeln der Technik, ausgewählten Rohren, Armaturen und Pumpen über ein rechnerisches Bestimmen und Einstellen von Regulierwiderständen oder selbständig wirkenden Abgleichorganen die ermittelten Sollwasserströme sicherzustellen. Das gilt in Heiz- und Kühlsystemen für die Bereiche der Erzeugung, Verteilung und Übergabe (z.B. für Raumheizflächen, Raumkühlflächen, Wärmeübertrager)

Erste Grundsteine für eine Weiterentwicklung bieten die in dem Normentwurf enthaltenen Rahmenbedingungen für Prüfverfahren unter Laborbedingungen. Diese enthalten Prüfkriterien für Durchfluss-Momentan-Werte bei Leistungsanforderung über alle regulären Betriebszustände und die Minimierung gegenseitiger hydraulischer Beeinflussung zwischen den zu optimierenden Strömungspfaden. Es werden jedoch noch keine praktikablen Lösungsansätze für Bestandsanlagen formuliert.

Danach gibt es aktuell kein Verfahren, keine Definition, keine Norm, keine VOB o.ä., die eine verbindliche Festlegung trifft, nach welchen Prüfkriterien eine Anlage ein hydraulisch abgeglichenes Betriebsverhalten aufweist. Es gibt keine verbindliche Definition, was wie gemessen wird, welche Sollwerte bzw. Sollverläufe mit welchen Toleranzen dafür gelten sollen. Es werden nur Berechnungsverfahren für den Auslegungszustand beschrieben, wobei als nicht mehr zeitgemäß anzusehen ist, dass der alleinige Bezug auf die Sollvolumenströme im Auslegungsfall erfolgt. Es kommt aber im Sinne des Energieeinsparungsziels und der Funktionssicherheit darauf an, dass die Wärmeversorgung in allen Lastsituationen bei möglichst niedrigem Temperaturniveau und möglichst niedrigem Volumenstrom gesichert ist. Eine Anlage weist also dann ein hydraulisch abgeglichenes Betriebsverhalten auf, wenn mit dem niedrigstmöglichen Temperaturniveau und dem niedrigstmöglichen Volumenstrom bei Sicherstellung der erforderlichen auslegungsgerechten Wärmeleistung aller Heizflächen in allen Raumlastsituationen und zu jedem Zeitpunkt in den Aufheizphasen ein identischer Anstieg der Raumtemperaturen gewährleistet werden kann.

Diese Funktion der erforderlichen auslegungsgerechten Wärmeleistung der Heizflächen ist dann erfüllt, wenn die Differenz von Vor- und Rücklauftemperatur als auslegungsgerechte lastabhängige, z.B. entsprechend einer vorgegebenen Heizkurve, Spreizung in den Wärmeübergabekomponenten wie Raumheizkörper oder Flächenheizungen gleichgroß ist und gleichzeitig auftritt.

Die Vorgehensweise einer messwertbasierten Analyse des Betriebsverhaltens einer Heizungsanlage wurde zur Bestimmung des Wärmeanschlusswertes und des Nutzungsgrades einer Heizungsanlage in der Patentschrift DE 10 2004 008 521 B3 Verfahren und Anordnung zum Bestimmen des Wärmeanschlusswertes eines Gebäudes beschrieben.

Es ist Aufgabe der Erfindung, die Nachteile des Standes der Technik zu beseitigen. Die Lösung dieser Aufgabe erfolgt durch die in den Ansprüchen aufgeführten Merkmale.

Zur Lösung der Aufgabe werden Sollfunktionen, die praktikabel messwertbasiert kontrolliert werden können, festgelegt.

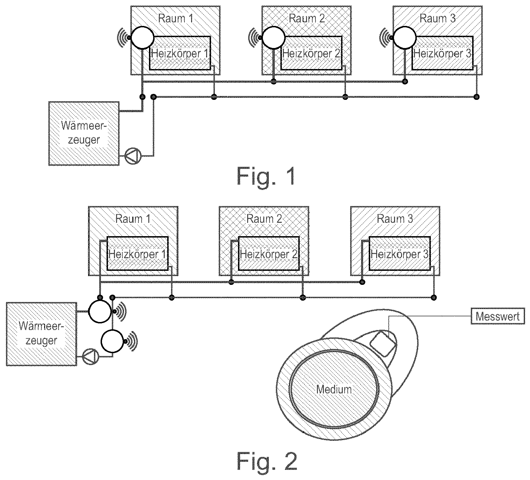

Dies erfolgt einmal durch das Erfassen und Auswerten der Gradienten der durch die Thermostate gemessenen Raumtemperaturen des jeweils betreffenden Kreises (vgl. Ausführungsbeispiel gemäß Figur 1) sowie das Erfassen und Auswerten des Gradienten der Spreizung von Vor- und Rücklauftemperatur des zu analysierenden Heizkreises (vgl. Ausführungsbeispiel gemäß Figur 2)

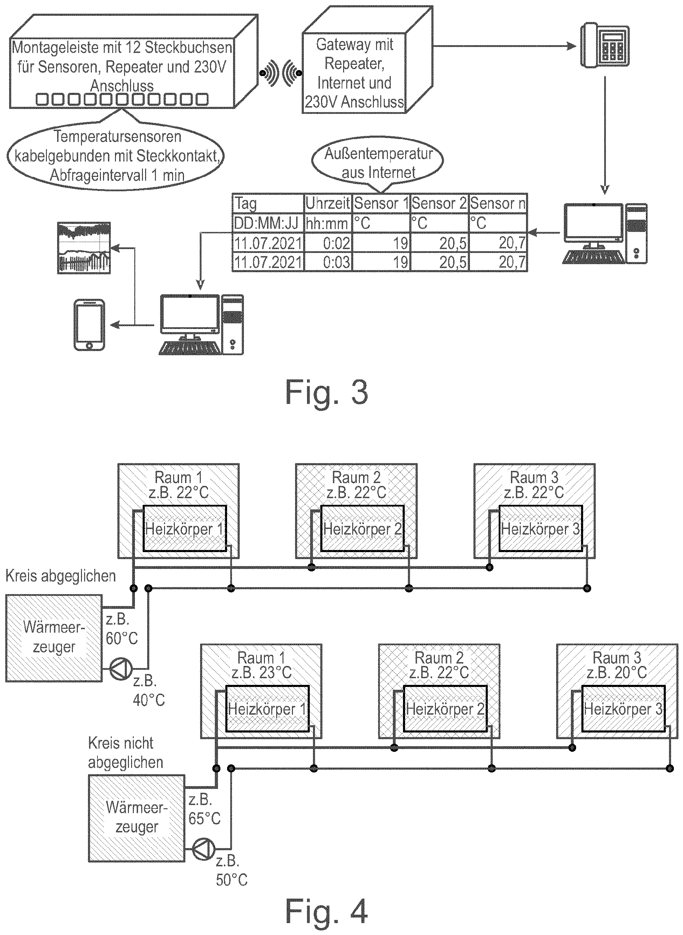

Bei Einsatz von digitalen Thermostaten im Informationsverbund liegen die Daten von Raumsolltemperatur, Raumisttemperatur und Ventilposition, z.B. jede Minute, vor und können erfasst und automatisiert verarbeitet werden. (vgl. Ausführungsbeispiel gemäß Figur 3)

So kann bei Nutzung eines bereits im Gebäude verbauten Systems aus digitalen Thermostaten im Informationsverbund das Aufheizverhalten der Räume messwertbasiert verglichen und nach vorgegebenen Toleranzen bewertet werden. Toleranzen können beispielsweise über entsprechende Normen, VOB oder Gesetze festgelegt sein.

Sind keine digitalen Thermostate im Informationsverbund vorhanden, soll mittels der Erfindung eine messwertbasierte Analyse des hydraulischen Abgleichs alternativ oder auch ergänzend ermöglicht werden.

Gemäß der vorgeschlagenen Ausführung ist zumindest an der Schnittstelle des Kreises und der Wärmquelle (Kessel, Mischer, Weiche, Station, Speicher, Wärmeübertrager) ein separates Fühlerpaar für die Vor- und Rücklauftemperatur des Mediums zusätzlich zu installieren und die Messwerte in z.B. Intervallen von 1 Minute zu erfassen und in eine Rechnereinheit zu übertragen.

Die Erfindung wird anhand eines bevorzugten Ausführungsbeispiels näher erläutert, ohne jedoch die Erfindung hierauf zu beschränken. Hierzu zeigen
- Figur 1: Kreis mit digitalen Thermostaten
- Figur 2: Kreis mit Fühlern für Vor- und Rücklauf an der Schnittstelle
- Figur 3: Datenfluss der automatisierten Verarbeitung
- Figur 4: Gegenüberstellung abgeglichen/nicht abgeglichen
- Figur 5: lastabhängige Spreizung
- Figur 6: Indikator Spreizungsgradient
- Figur 7: Ausgabebeispiel

Die Erfindung soll anhand des Verlaufs der Vor- und Rücklauftemperaturdaten des Mediums an der Schnittstelle des Kreises und der Wärmquelle detektieren, ob ein Kreis hydraulisch abgeglichen oder nicht abgeglichen ist und eine Basis für messwertbasierte Einschätzung des hydraulischen Zustandes nach vorgegebenen Toleranzen auch dann ermöglichen, wenn keine Raumtemperaturdaten vorliegen. Toleranzen können beispielsweise über entsprechende Normen, VOB oder Gesetze festgelegt oder freiwillig bzw. durch den Systemanbieter definiert werden.

Ausgehend von der Erfahrung, dass bei hydraulisch nicht abgeglichenen Energieanlagen Pumpenleistungen zu hoch eingestellt und Heizkurven nach oben verschoben worden, um auch am Schlechtpunkt die erforderliche Heizleistung bereitstellen zu können und der nach Stand Technik erfolgten Gegenüberstellung von abgeglichenen und nicht abgeglichenen Kreisen wurden erfindungsgemäß die zeitabhängigen Mess- und Berechnungswerte Vorlauftemperatur und Spreizung für die Lösung der Aufgabe nutzbar gemacht. Figur 4 stellt im oberen Kreis einen möglichen Zustand im abgeglichenen System dar, während der untere Kreis einen möglichen Zustand des unabgeglichenen Systems schematisch zeigt.

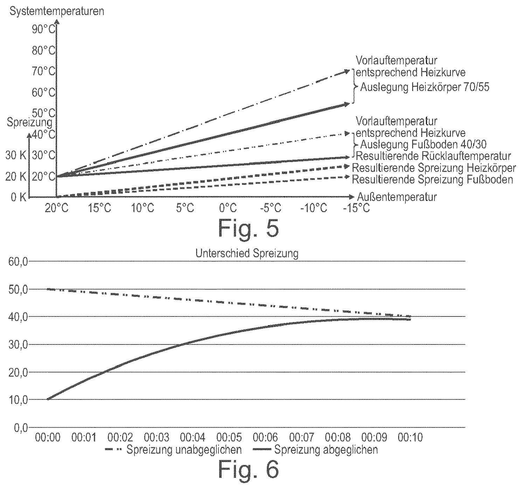

Daraus wird der Indikator "Spreizungsgradient in der Aufheizphase" generiert, der in einem z.B. 24-h Zyklus aus den zeit- und lastabhängigen Messwerten, wie in einer Ausführungsform in Figur 5 dargestellt, Vorlauf, Rücklauf und z.B. Außentemperatur oder Soll-Ist-Differenz der Raumtemperatur sowie der Auslegung der Heizungskomponenten eines Kreises (z.B. Heizkörper oder Flächenheizung) die Bewertung des hydraulischen Abgleichs ermöglicht. Zudem ist die Ausgabe von Steuerungswerten zur Anpassung des hydraulischen Abgleichs des wenigstens einen Heizkreises vorgesehen, wenn dies aufgrund der berechneten Werte bzw. des Indikators angezeigt ist. Ein Vergleich zwischen der Spreizung bei einem abgeglichenen (obere Kurve) und unabgeglichenen System (untere Kurve) wird exemplarisch in Figur 6 dargestellt.

Als Aufheizphase wird die Phase definiert, in der die Sollraumtemperatur bzw. die Vorlauftemperatur, z.B. nach einer Nachtabsenkung, sprunghaft ansteigt und sich nach einem Zeitabschnitt der Aufheizung der Räume wieder ein quasistationärer Zustand der Raumtemperatur einstellt.

In einem abgeglichenen System entsteht am Anfang der Aufheizphase insb eine niedrige Rücklauftemperatur, weil alle Heizkörper gleichmäßig eine hohe Temperaturdifferenz aufweisen. Mit der Zeit schließen die Ventile in den Räumen bei Erreichen der Raumsolltemperatur synchron und die (außentemperaturabhängige) quasistationäre Spreizung stellt sich relativ langsam ein.

Im einen nicht abgeglichen System ergibt sich am Anfang insbesondere eine hohe Rücklauftemperatur, weil die Heizkörper nahe an der Schnittstelle anteilig einen hohen Volumenstrom aufgrund des geringen Widerstands bei gleichzeitig hoher Rücklauftemperatur aufweisen. Die Ventile schließen asynchron zunächst in überversorgten Räumen, die quasistationäre Spreizung stellt sich relativ schnell ein.

Aus dem Unterschied der Gradienten der Spreizung wird in der Erfindung ein Algorithmus generiert, der eine messwertbasierte Beurteilung des Zustandes des hydraulischen Abgleichs eines Kreises ermöglicht.

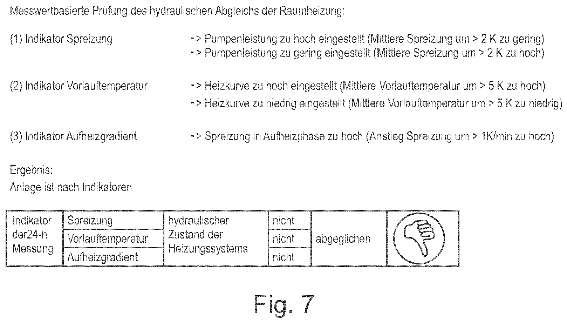

Auf der Basis des Indikators "Spreizungsgradient in der Aufheizphase" wird eine Ausgabe generiert, die eine messwertbasierte Analyse des hydraulischen Zustandes des betreffenden Kreises und insbesondere auch die Ausgabe von Steuerungswerten zur Anpassung des hydraulischen Abgleichs des wenigstens einen Heizkreises ermöglicht und damit den Stand Technik weiterentwickelt, wie beispielhaft und schematisch in Figur 7 dargestellt.

Die Erfindung betrifft somit ein Mess- und Analyse-System zur Zustandsbewertung des hydraulischen Abgleichs eines Heizkreises durch Generierung eines Indikators "Spreizungsaufheizgradient" durch messwertbasierte Analyse des zustands-, zeit- und lastabhängigen Aufheizverhaltens dieses Heizkreises, wobei das Mess- und Analyse-System Temperaturfühler zur zeitabhängigen Erfassung von Vor- und Rücklauftemperaturen eines flüssigen Mediums an der Schnittstelle des Heiz- oder Kühlkreises mit angeschlossenen Wärmeübergabekomponenten aufweist. Dabei ist auch eine optionale Integration der Außentemperatur oder der Soll-Ist-Differenz der Raumtemperatur zur Bestimmung der Raumlast in der Aufheizphase vorgesehen. Das erfindungsgemäße Mess- und Analyse-System umfasst des Weiteren Komponenten zur Datenübertragung (z.B. WLAN, Gateway, Internet) Datenverarbeitung (z.B. Zentralrechner) und Ergebnisausgabe (z.B. App auf Smartphone). Die Erfindung stellt auch ein Berechnungsverfahren für die zustands-, zeit- und lastabhängigen Indikatoren Spreizung, Vorlauftemperatur und Aufheizgradient zur Verfügung. Darüber sieht die Erfindung insbesondere auch die Ausgabe von Steuerungswerten zur Anpassung des hydraulischen Abgleichs des wenigstens einen Heizkreises vor.

Die Möglichkeit des Datenverbundes mit bereits erfassten zeitabhängigen Raumtemperaturmesswerten zur ergänzenden bzw. alternativen Bewertung des hydraulischen Abgleichs des Heiz- oder Kühlkreises mit angeschlossenen Wärmeübergabekomponenten Komponenten zur Datenübertragung (z.B. WLAN, Gateway, Internet) Datenverarbeitung (z.B. Zentralrechner) und Ergebnisausgabe (z.B. App auf Smartphone) ist ebenfalls vorgesehen.

In einer Weiterbildung ist vorgesehen, dass das Verfahren als computerimplementiertes Verfahren ausgebildet ist.

Weiterer Aspekt der Erfindung ist die Bereitstellung eines Berechnungsverfahren für die zustands-, zeit- und lastabhängigen Indikatoren Spreizung, Vorlauftemperatur und Aufheizgradient.

Die Erfindung stellt auch eine Erfassungs- und Auswerteeinheit zur Bewertung des Zustands des hydraulischen Abgleichs wenigstens eines Heizkreises in einem Heizungssystem umfassend:
- wenigstens zwei Temperaturfühler zur zeitabhängigen Messung von Vor- und Rücklauftemperaturen eines flüssigen Mediums an der Schnittstelle des Heiz- oder Kühlkreises mit angeschlossenen Wärmeübergabekomponenten
- eine Erfassungs- und Speichereinheit zur zeitabhängigen Erfassung von Vor- und Rücklauftemperaturen eines flüssigen Mediums an einer Schnittstelle des Heiz- oder Kühlkreises mit angeschlossenen Wärmeübergabekomponenten und
- eine Berechnungseinheit zur Berechnung von zustands-, zeit- und/oder lastabhängigen Indikatoren Spreizung, Vorlauftemperatur und Aufheizgradient und Ableitung des Zustands des hydraulischen Abgleichs eines Heizkreises
- eine Ausgabeeinheit zur Ausgabe von Zustandswerten des hydraulischen Abgleichs des wenigstens einen Heizkreises und/oder Steuerungsbefehlen für eine Anpassung des hydraulischen Abgleichs des wenigstens einen Heizkreises.

Bevorzugt weist die Ausgabeeinheit Komponenten zur Datenübertragung auf, um bevorzugt über WLAN, ein Gateway, das Internet, und/oder eine Datenverarbeitung die erfassten und/oder berechneten Werte an einen Zentralrechner, ein Mobilgerät und/oder eine Steuerungseinheit des wenigstens einen Heizkreises auszugeben oder umfasst diese.

In einer vorteilhaften Weiterbildung ist vorgesehen, dass der Zentralrechner eine Ausgabe- und/oder Auswerteapplikation für die erfassten und/oder berechneten Werte und/oder eine Steuerungsapplikation für die Ausgabe und Umsetzung von Steuerungsbefehlen in der Steuerungseinheit des wenigstens einen Heizkreises aufweist.

Die Erfindung betrifft auch ein System zur Erfassung, Auswertung und Bewertung des Zustands des hydraulischen Abgleichs wenigstens eines Heizkreises in einem Heizungssystem, wobei das System zur Ausgabe von Zustandswerten des hydraulischen Abgleichs des wenigstens einen Heizkreises und/oder Steuerungsbefehlen für eine Anpassung des hydraulischen Abgleichs des wenigstens einen Heizkreises dazu ausgelegt ist.

Das System umfasst dabei bevorzugt auch Komponenten zur Datenübertragung, um bevorzugt über WLAN, einen Gateway, das Internet, und/oder eine Datenverarbeitung die erfassten und/oder berechneten Werte an einen Zentralrechner, ein Mobilgerät und/oder eine Steuerungseinheit des wenigstens einen Heizkreises auszugeben, wobei der Zentralrechner oder das Mobilgerät insbesondere eine Ausgabe- und/oder Auswertapplikation für die erfassten und/oder berechneten Werte und/oder eine Steuerungsapplikation für die Ausgabe und Umsetzung von Steuerungsbefehlen in der Steuerungseinheit des wenigstens einen Heizkreises aufweist.

Erfindungsgemäß ist auch ein Computerprogrammprodukt vorgesehen, das in einer Erfassungs- und Auswerteeinheit, optional auf einem Zentralrechner oder einem Mobilgerät, zur Bewertung des Zustands des hydraulischen Abgleichs wenigstens eines Heizkreises in einem Heizungssystem verwendet wird, wobei die Erfassungs- und Auswerteeinheit bevorzugt aufweist oder umfasst:
- wenigstens zwei Temperaturfühler zur zeitabhängigen Messung von Vor- und Rücklauftemperaturen eines flüssigen Mediums an der Schnittstelle des Heiz- oder Kühlkreises mit angeschlossenen Wärmeübergabekomponenten,
- eine Erfassungs- und Speichereinheit zur zeitabhängigen Erfassung von Vor- und Rücklauftemperaturen eines flüssigen Mediums an einer Schnittstelle des Heiz- oder Kühlkreises mit angeschlossenen Wärmeübergabekomponenten, und
- eine Berechnungseinheit zur Berechnung von zustands-, zeit- und/oder lastabhängigen Indikatoren Spreizung, Vorlauftemperatur und Aufheizgradient und Ableitung des Zustands des hydraulischen Abgleichs eines Heizkreises,
und das dazu ausgelegt ist, über eine Ausgabeeinheit die Ausgabe von Zustandswerten des hydraulischen Abgleichs des wenigstens einen Heizkreises und/oder Steuerungsbefehlen für eine Anpassung des hydraulischen Abgleichs des wenigstens einen Heizkreises auszugeben.

Dabei ist insbesondere vorgesehen, dass die Ausgabeeinheit Komponenten zur Datenübertragung aufweist, um bevorzugt über WLAN, ein Gateway, das Internet und/oder eine Datenverarbeitung die erfassten und/oder berechneten Werte an einen Zentralrechner, ein Mobilgerät mit einer Ausgabe und/oder Auswertungsapplikation und/oder an eine Steuerungseinheit des wenigstens einen Heizkreises auszugeben.

Als günstig erweist sich in diesem Zusammenhang, wenn der Zentralrechner eine Ausgabe- und/oder Auswertapplikation für die erfassten und/oder berechneten Werte und/oder eine Steuerungsapplikation für die Ausgabe und Umsetzung von Steuerungsbefehlen in der Steuerungseinheit des wenigstens einen Heizkreises aufweist.

Die Erfindung betrifft auch ein auf einem von einer Rechnereinheit, bevorzugt einen Zentralrechner oder einem Mobilgerät, auslesbaren Datenträger gespeichertes Computerprogrammprodukt wie zuvor beschrieben. Der Datenträger kann dabei in physischer Verkörperung vorliegen oder als virtueller oder cloudbasierter Speicherort ausgebildet sein.

Ebenfalls Teil der Erfindung ist eine Rechnereinheit, insbesondere ein Zentralrechner oder ein Mobilgerät, die konfiguriert ist, das Computerprogrammprodukt wie zuvor beschrieben, auszuführen.

Die Erfindung in allen zuvor beschriebenen Aspekten kann auch in übergeordneten Heizungssystemen mit einem oder mehreren Heizkreisen angewendet werden und ist somit nicht auf die Verwendung in einem Heizkreis beschränkt. Bei der Verwendung in mehreren, insbesondere gekoppelten Heizkreisen ist es möglich, eine Messwerterfassung und -auswertung und eine nach Auswertung gegebenenfalls notwendige Anpassung des hydraulischen Abgleichs über mehrere Heizkreise hinweg vorzunehmen. Auch dieser Aspekt ist von der Erfindung umfasst und betrifft sämtliche vorbeschriebenen Ausführungsformen der Erfindung gleichermaßen.

## Patentansprüche

1. Verfahren zur Zustandsbewertung des hydraulischen Abgleichs wenigstens eines Heizkreises unter Verwendung eines messwertbasierten Mess- und Analyse-Systems umfassend die Schritte:
- Erfassen von Messwerten für ein zustands-, zeit- und lastabhängige Aufheizverhalten des wenigstens einen Heizkreises, umfassend:
die Temperaturwerte der Vorlauftemperatur und der Rücklauftemperatur die Temperaturspreizung von Vorlauftemperatur und Rücklauftemperatur, und
die zeitabhängigen Aufheizgradienten von Vorlauftemperatur, Rücklauftemperatur und Spreizung,
- Analyse der erfassten Messwerte des Heizkreises,
- Ableitung eines Indikators für den Spreizungsaufheizgradienten aus den erfassten Messwerten,
- Bewertung des Zustands eines hydraulischen Abgleichs des wenigstens einen Heizkreises anhand des Indikators für den Spreizungsaufheizgradienten,
- Ausgabe von Steuerungswerten zur Anpassung des hydraulischen Abgleichs des wenigstens einen Heizkreises.

2. Verfahren nach Anspruch 1, **dadurch gekennzeichnet, dass** zusätzlich erfasste Temperaturwerte der Außentemperatur oder Werte einer Soll-Ist-Differenz der Raumtemperaturen sowie der Aufheizgradienten der Raumtemperaturen zur Bestimmung von Raumlasten in der Aufheizphase in die Analyse der erfassten Messwerte und/oder der Ableitung des Indikators einbezogen werden.

3. Verfahren nach Anspruch 1 oder 2, **dadurch gekennzeichnet, dass** die Berechnung von zustands-, zeit- und lastabhängigen Indikatoren Spreizung, Vorlauftemperatur und Aufheizgradienten vorgesehen ist und die Berechnung auf Basis der zeitabhängigen Erfassung von Vor- und Rücklauftemperaturen eines flüssigen Mediums an einer Schnittstelle des Heiz- oder Kühlkreises mit angeschlossenen Wärmeübergabekomponenten erfolgt.

4. Verfahren nach Anspruch 3, **dadurch gekennzeichnet, dass** die zeitabhängige Erfassung von Vor- und Rücklauftemperaturen eines flüssigen Mediums an der Schnittstelle des Heiz- oder Kühlkreises mit angeschlossenen Wärmeübergabekomponenten durch Temperaturfühler vorgesehen ist.

5. Verfahren nach einem der vorhergehenden Ansprüche, **dadurch gekennzeichnet, dass** bereits erfasste zeitabhängige Raumtemperaturmesswerte in eine Berechnung zur ergänzenden und/oder alternativen Bewertung des hydraulischen Abgleichs des Heiz- oder Kühlkreises mit angeschlossenen Wärmeübergabekomponenten einbezogen werden.

6. Verfahren nach einem der vorhergehenden Ansprüche, wobei das Verfahren als computerimplementiertes Verfahren ausgebildet ist.

7. Erfassungs- und Auswerteeinheit zur Bewertung des Zustands des hydraulischen Abgleichs wenigstens eines Heizkreises in einem Heizungssystem umfassend:
- wenigstens zwei Temperaturfühler zur zeitabhängigen Messung von Vor- und Rücklauftemperaturen eines flüssigen Mediums an der Schnittstelle des Heiz- oder Kühlkreises mit angeschlossenen Wärmeübergabekom ponenten
- eine Erfassungs- und Speichereinheit zur zeitabhängigen Erfassung von Vor- und Rücklauftemperaturen eines flüssigen Mediums an einer Schnittstelle des Heiz- oder Kühlkreises mit angeschlossenen Wärmeübergabekomponenten und
- eine Berechnungseinheit zur Berechnung von zustands-, zeit- und/oder lastabhängigen Indikatoren Spreizung, Vorlauftemperatur und Aufheizgradient der Spreizung und Ableitung des Zustands des hydraulischen Abgleichs eines Heizkreises
- eine Ausgabeeinheit zur Ausgabe von Zustandswerten des hydraulischen Abgleichs des wenigstens einen Heizkreises und/oder Steuerungsbefehlen für eine Anpassung des hydraulischen Abgleichs des wenigstens einen Heizkreises.

8. Erfassungs- und Auswerteeinheit nach Anspruch 7, **dadurch gekennzeichnet, dass** die Ausgabeeinheit Komponenten zur Datenübertragung aufweist, um bevorzugt über WLAN, ein Gateway, das Internet, und/oder eine Datenverarbeitung die erfassten und/oder berechneten Werte, an einen Zentralrechner, ein Mobilgerät und/oder eine Steuerungseinheit des wenigstens einen Heizkreises auszugeben.

9. Erfassungs- und Auswerteeinheit nach Anspruch 8, **dadurch gekennzeichnet, dass** der Zentralrechner eine Ausgabe- und/oder Auswertapplikation für die erfassten und/oder berechneten Werte und/oder eine Steuerungsapplikation für die Ausgabe und Umsetzung von Steuerungsbefehlen in der Steuerungseinheit des wenigstens einen Heizkreises aufweist.

10. System zur Erfassung, Auswertung und Bewertung des Zustands des hydraulischen Abgleichs wenigstens eines Heizkreises in einem Heizungssystem, wobei das System zur Ausgabe von Zustandswerten des hydraulischen Abgleichs des wenigstens einen Heizkreises und/oder Steuerungsbefehlen für eine Anpassung des hydraulischen Abgleichs des wenigstens einen Heizkreises dazu ausgelegt ist.

11. Computerprogrammprodukt, das in einer Erfassungs- und Auswerteeinheit zur Bewertung des Zustands des hydraulischen Abgleichs wenigstens eines Heizkreises in einem Heizungssystem verwendet wird, wobei die Erfassungs- und Auswerteeinheit aufweist:
- wenigstens zwei Temperaturfühler zur zeitabhängigen Messung von Vor- und Rücklauftemperaturen eines flüssigen Mediums an der Schnittstelle des Heiz- oder Kühlkreises mit angeschlossenen Wärmeübergabekomponenten,
- eine Erfassungs- und Speichereinheit zur zeitabhängigen Erfassung von Vor- und Rücklauftemperaturen eines flüssigen Mediums an einer Schnittstelle des Heiz- oder Kühlkreises mit angeschlossenen Wärmeübergabekomponenten, und
- eine Berechnungseinheit zur Berechnung von zustands-, zeit- und/oder lastabhängigen Indikatoren Spreizung, Vorlauftemperatur und Aufheizgradient der Spreizung und Ableitung des Zustands des hydraulischen Abgleichs eines Heizkreises,
und dazu ausgelegt ist über eine Ausgabeeinheit die Ausgabe von Zustandswerten des hydraulischen Abgleichs des wenigstens einen Heizkreises und/oder Steuerungsbefehlen für eine Anpassung des hydraulischen Abgleichs des wenigstens einen Heizkreises auszugeben.

12. Computerprogrammprodukt nach Anspruch 11, wobei die Ausgabeeinheit Komponenten zur Datenübertragung aufweist, um bevorzugt über WLAN, ein Gateway, das Internet und/oder eine Datenverarbeitung die erfassten und/oder berechneten Werte an einen Zentralrechner, ein Mobilgerät mit einer Ausgabe und/oder Auswertungsapplikation und/oder an eine Steuerungseinheit des wenigstens einen Heizkreises auszugeben.

13. Computerprogrammprodukt nach Anspruch 11 oder 12, wobei der Zentralrechner eine Ausgabe- und/oder Auswertapplikation für die erfassten und/oder berechneten Werte und/oder eine Steuerungsapplikation für die Ausgabe und Umsetzung von Steuerungsbefehlen in der Steuerungseinheit des wenigstens einen Heizkreises aufweist.

14. Auf einem von einer Rechnereinheit auslesbaren Datenträger gespeichertes Computerprogrammprodukt gemäß einem der Ansprüchen 11 bis 13.

15. Rechnereinheit, die konfiguriert ist, das Computerprogrammprodukt nach einem der Ansprüche 11 bis 13 auszuführen.
